# EUROPEAN PATENT SPECIFICATION

(11) **EP 4 233 595 B1**
(45) Date of publication and mention of the grant of the patent: **12.08.2026**
(21) Application number: 23172964.1
(22) Date of filing: 15.09.2021
(51) Int. Cl.: A24F 40/465, A24F 40/20

(54) **AEROSOL PROVISION DEVICE**
AEROSOLBEREITSTELLUNGSVORRICHTUNG
DISPOSITIF DE FOURNITURE D'AÉROSOL

(30) Priority: 16.09.2020 GB 202014593
(43) Date of publication of application: 30.08.2023
(62) Document number(s) of the earlier application(s) in accordance with Art. 76 EPC: 21778008.9 / 4 090 188
(73) Proprietor: Nicoventures Trading Limited, London WC2R 3LA (GB)
(72) Inventor: THOMAS, Michael, London (GB); MCGRATH, Conor, London (GB); BURGESS, Jonathan, London (GB); WARREN, Luke, London (GB); BUREAU, David, London (GB)
(74) Representative: Dehns

(56) References cited:
- EP-A1- 3 295 813
- WO-A1-2019/129639
- KR-A- 20200 078 410

## Description

### Technical Field

The present invention relates to an aerosol provision device and an aerosol provision system comprising an aerosol provision device and an article comprising aerosol generating material.

### Background

Smoking articles such as cigarettes, cigars and the like burn tobacco during use to create tobacco smoke. Attempts have been made to provide alternatives to these articles that burn tobacco by creating products that release compounds without burning. Examples of such products are heating devices which release compounds by heating, but not burning, the material. The material may be for example tobacco or other non-tobacco products, which may or may not contain nicotine.

WO2019129639A1 discloses an induction heating assembly for a vapour generating device comprising an induction coil and a heating compartment arranged to receive an induction heatable cartridge. The assembly has a first electromagnetic shield layer arranged outward of the induction coil and a second electromagnetic shield layer arranged outward of the first electromagnetic shield layer which differ in one or both of their electrical conductivity and their magnetic permeability.

### Summary

According to the invention, there is provided an aerosol provision device, comprising: a heater assembly configured to receive aerosol generating material, wherein the heater assembly comprises a susceptor which is heatable by penetration with a varying magnetic field; a first insulating member extending around the susceptor; a second insulating member extending around and spaced from the first insulating member, and a third insulating member extending between the first and second insulating members, and an inductor coil extending around the second insulating member such that the first, second and third insulating members are positioned between the inductor coil and the susceptor, wherein the inductor coil is configured to generate the varying magnetic field.

According to an aspect of the present disclosure, there is provided an aerosol provision device, comprising: a heater assembly comprising a receptacle configured to receive aerosol generating material; a first insulating member extending around the susceptor; a second insulating member extending around and spaced from the first insulating member, and a third insulating member extending between the first and second insulating members.

According to an aspect of the present disclosure, there is provided an aerosol provision device, comprising: a heater assembly configured to receive aerosol generating material, wherein the heater assembly comprises a susceptor which is heatable by penetration with a varying magnetic field; an inductor coil extending around the susceptor, wherein the inductor coil is configured to generate the varying magnetic field; a support member extending around the susceptor between the susceptor and the inductor coil; and an insulating layer extending around the susceptor between the susceptor and the inductor coil.

According to an aspect of the present disclosure, there is provided an aerosol provision system comprising: an aerosol provision device as described in any of the paragraphs above; and an article comprising aerosol generating material, wherein the article is dimensioned to be at least partially received within the heater assembly.

In use, the inductor coil may be configured to heat the susceptor to a temperature of between about 200 and about 300 °C. In use, the inductor coil may be configured to heat the susceptor to a temperature of about 350 °C.

The inductor coil may be substantially helical. The inductor coil may follow a helical path. The inductor coil may follow a spiral path. For example, the inductor coil may be formed from wire, such as Litz wire, which is wound helically around the support member. The wire may be a solid wire.

Reference to an "outer surface" of an entity means the surface positioned furthest away from the axis of the susceptor, in a direction perpendicular to the axis. Similarly, reference to an "inner surface" of an entity means the surface positioned closest to the axis of the susceptor, in a direction perpendicular to the axis.

Reference to the "thickness" of an entity means the average distance between the inner surface of the entity and the outer surface of the entity. Thickness may be measured in a direction perpendicular to the axis of the susceptor.

The or each support member, the susceptor and the insulating layer may be coaxial.

In some examples, in use, the inductor coil is configured to heat the susceptor to a temperature of between about 200 °C and about 350 °C, such as between about 240°C and about 300°C, or between about 250°C and about 280°C. When the outer cover is spaced apart from the susceptor by at least this distance, the temperature of the outer cover remains at a safe level, such as less than about 60 °C, less than about 50 °C, or less than about 48 °C, or less than about 43°C.

In a particular example, the or each support member is constructed from polyether ether ketone (PEEK). PEEK has good insulating properties and is well suited for use in an aerosol provision device.

In another example, the or each support member may comprise mica or mica-glass ceramic.

The or each support member may have a thermal conductivity of less than about 0.5 W/mK, or less than about 0.4 W/mK. For example, the thermal conductivity may be about 0.3 W/mK. PEEK has a thermal conductivity of about 0.32W/mK.

The or each support member may have a melting point of greater than about 320 °C, such as greater than about 300 °C, or greater than about 340 °C. PEEK has a melting point of 343 °C.

The device may be a tobacco heating device, also known as a heat-not-burn device.

Further features and advantages of the invention will become apparent from the following description of preferred embodiments of the invention, given by way of example only, which is made with reference to the accompanying drawings.

### Brief Description of the Drawings

Figure 1 shows a front view of an example of an aerosol provision device;
Figure 2 shows a partially exploded side view of the aerosol provision device of Figure 1 showing a chassis, end members, power source, aerosol generating assembly, replaceable article, and outer cover;
Figure 3 shows a close up cross-sectional side view of part of the aerosol provision device of Figure 1;
Figure 4 is a close up cross sectional view showing part of the aerosol generating assembly of Figure 2;
Figure 5 is another close up cross sectional view showing a proximal part of the aerosol generating assembly of Figure 2;
Figure 6 is another close up cross sectional view showing a distal part of the aerosol generating assembly of Figure 2;
Figure 7 is another close up cross sectional view showing part of the aerosol generating assembly of Figure 2;
Figure 8 is another close up cross sectional view showing part of the aerosol generating assembly of Figure 2;
Figure 9 shows a side view of the aerosol generating assembly of Figure 2 including inductor coils and a coil support;
Figure 10 shows a side view of the coil support of Figure 9;
Figure 11 is a side view of the chassis and aerosol generating assembly of Figure 2; and
Figure 12 is a close up side view of part of the coil support of Figure 4 showing a thermocouple mount.

### Detailed Description

As used herein, the term "aerosol generating material" includes materials that provide volatilised components upon heating, typically in the form of an aerosol. Aerosol generating material includes any tobacco-containing material and may, for example, include one or more of tobacco, tobacco derivatives, expanded tobacco, reconstituted tobacco or tobacco substitutes. Aerosol generating material also may include other, non-tobacco, products, which, depending on the product, may or may not contain nicotine. Aerosol generating material may for example be in the form of a solid, a liquid, a gel, a wax or the like. Aerosol generating material may for example also be a combination or a blend of materials. Aerosol generating material may also be known as "smokable material".

Apparatus is known that heats aerosol generating material to volatilise at least one component of the aerosol generating material, typically to form an aerosol which can be inhaled, without burning or combusting the aerosol generating material. Such apparatus is sometimes described as an "aerosol generating device", an "aerosol provision device", a "heat-not-burn device", a "tobacco heating product device" or a "tobacco heating device" or similar. Similarly, there are also so-called e-cigarette devices, which typically vaporise an aerosol generating material in the form of a liquid, which may or may not contain nicotine. The aerosol generating material may be in the form of or be provided as part of a rod, cartridge or cassette or the like which can be inserted into the apparatus. A heater for heating and volatilising the aerosol generating material may be provided as a "permanent" part of the apparatus.

An aerosol provision device can receive an article comprising aerosol generating material for heating. An "article" in this context is a component that includes or contains in use the aerosol generating material, which is heated to volatilise the aerosol generating material, and optionally other components in use. A user may insert the article into the aerosol provision device before it is heated to produce an aerosol, which the user subsequently inhales. The article may be, for example, of a predetermined or specific size that is configured to be placed within a heating chamber of the device which is sized to receive the article.

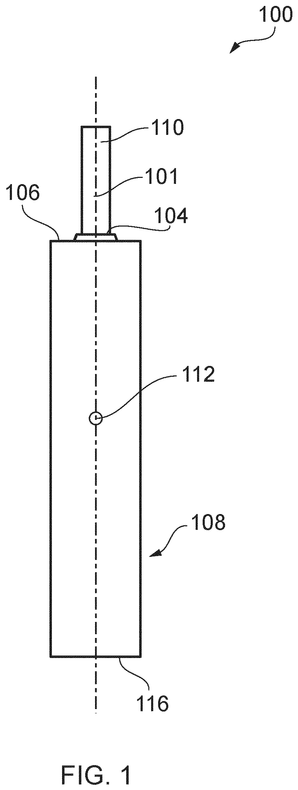

Figure 1 shows an example of an aerosol provision device 100 for generating aerosol from an aerosol generating medium/material. In broad outline, the device 100 may be used to heat a replaceable article 110 comprising the aerosol generating medium, to generate an aerosol or other inhalable medium which is inhaled by a user of the device 100.

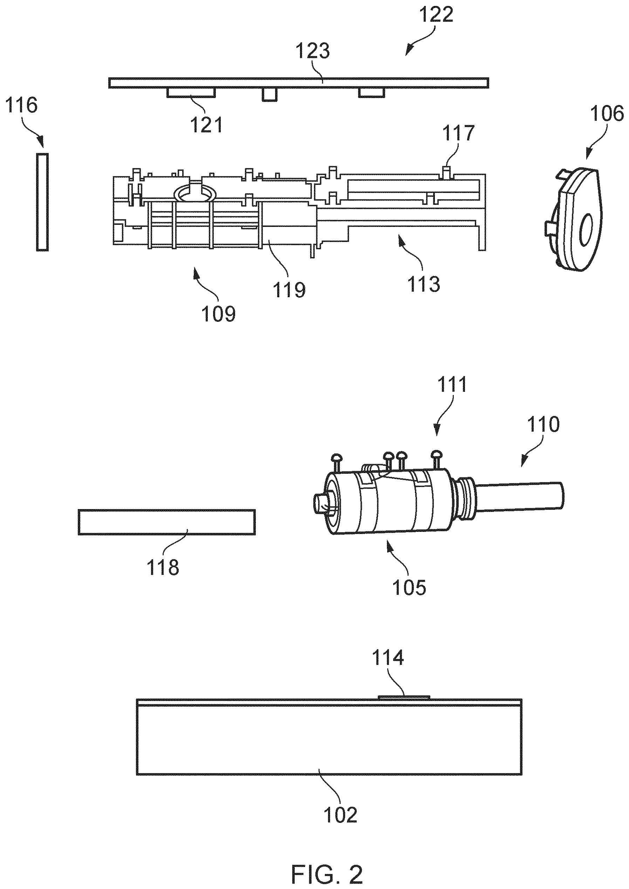

The device 100 comprises a housing 102 (including an outer cover) which surrounds and houses various components of the device 100. The device 100 has an opening 104 in one end, through which the article 110 may be inserted for heating by a heater assembly 105 (refer to Figure 2). In use, the article 110 may be fully or partially inserted into the heater assembly 105 where it may be heated by one or more components of the heater assembly 105.

The device 100 may also include a user-operable control element 112, such as a button or switch, which operates the device 100 when pressed. For example, a user may turn on the device 100 by operating the switch 112.

The device 100 defines a longitudinal axis 101.

Figure 2 depicts a schematic exploded view of the device 100 of Figure 1. The device 100 comprises the outer cover 102, a first end member 106 and a second end member 116. The device 100 includes a chassis 109, a power source 118, and an aerosol generating assembly 111 including the heater assembly 105. The device 100 further comprises at least one electronics module 122.

The outer cover 102 forms part of a device shell 108. The first end member 106 is arranged at one end of the device 100 and the second end members 116 is arranged at an opposite end of the device 100. The first and second end members 106, 116 close the outer cover 102. The first and second end members 106, 116 form part of the shell 108. The device 100 in embodiments comprises a lid (not shown) which is moveable relative to the first end member 106 to close the opening 104 when no article 110 is in place.

The device 100 may also comprise an electrical component, such as a connector/port 114, which can receive a cable to charge a battery of the device 100. For example, the connector 114 may be a charging port, such as a USB charging port. In some examples the connector 114 may be used additionally or alternatively to transfer data between the device 100 and another device, such as a computing device.

The device 100 includes the chassis 109. The chassis 109 is received by the outer cover 102. The aerosol generating assembly 111 comprises the heater assembly 105 into which, in use, the article 110 may be fully or partially inserted where it may be heated by one or more components of the heater assembly 105. The aerosol generating assembly 111 and the power source 118 are mounted on the chassis 109. The chassis 109 is a one piece component.

The chassis 109 may be formed together during manufacture, for example through an injection moulding process. Alternatively, two or more features of the chassis 109 may be separately formed initially and then formed together during a manufacturing stage to form a one-piece component, for example by a welding process.

One-piece component refers to a component of the device 100 which is not separable into two or more components following assembly of the device 100. Integrally formed relates to two or more features that are formed into a one piece component during a manufacturing stage of the component.

The first and second end members 106, 116 together at least partially define end surfaces of the device 100. For example, the bottom surface of the second end member 116 at least partially defines a bottom surface of the device 100. Edges of the outer cover 102 may also define a portion of the end surfaces. The first and second end members 116 close open ends of the outer cover 102. The second end member 116 is at one end of the chassis 109.

The end of the device 100 closest to the opening 104 may be known as the proximal end (or mouth end) of the device 100 because, in use, it is closest to the mouth of the user. In use, a user inserts an article 110 into the opening 104, operates the user control 112 to begin heating the aerosol generating material and draws on the aerosol generated in the device. This causes the aerosol to flow through the device 100 along a flow path towards the proximal end of the device 100.

The other end of the device furthest away from the opening 104 may be known as the distal end of the device 100 because, in use, it is the end furthest away from the mouth of the user. As a user draws on the aerosol generated in the device, the aerosol flows in a direction towards the proximal end of the device 100. The terms proximal and distal as applied to features of the device 100 will be described by reference to the relative positioning of such features with respect to each other in a proximal-distal direction along the axis 101.

The power source 118 is disposed at the distal end of the device 100. The chassis 109 mounts the power source 118. The chassis 109 comprises a power supply mount 119. The chassis 109 partially encloses the power source 118. The power source 118 may be, for example, a battery, such as a rechargeable battery or a non-rechargeable battery. Examples of suitable batteries include, for example, a lithium battery (such as a lithium-ion battery), a nickel battery (such as a nickel-cadmium battery), and an alkaline battery. The battery is electrically coupled to the aerosol generating assembly 111 to supply electrical power when required and under control of a controller 121 to heat the aerosol generating material. In this example, the battery is connected to the chassis 109, acting as a central support, which holds the battery 118 in place.

The power source 118 and aerosol generating assembly 111 are disposed in an axial arrangement, with the power source 118 at the distal end of the device 100 and the aerosol generating assembly 111 at the proximal end of the device 100. Other configurations are anticipated. The chassis 109 comprises an aerosol generating assembly mount 113.

The device 100 further comprises at least one electronics module 122. The electronics module 122 may comprise, for example, a printed circuit board (PCB) 123. The PCB 123 may support at least one controller 121, such as a processor, and memory. The PCB 123 may also comprise one or more electrical tracks to electrically connect together various electronic components of the device 100. For example, the battery terminals may be electrically connected to the PCB 123 so that power can be distributed throughout the device 100. The connector 114 may also be electrically coupled to the battery 118 via the electrical tracks. The chassis 109 comprises a PCB mount 117.

The aerosol generating assembly 111 is an inductive heating assembly and comprises various components to heat the aerosol generating material of the article 110 via an inductive heating process. Induction heating is a process of heating an electrically conducting object (such as a susceptor) by electromagnetic induction. An induction heating assembly may comprise an inductive element, for example, one or more inductor coils, and a device for passing a varying electric current, such as an alternating electric current, through the inductive element. The varying electric current in the inductive element produces a varying magnetic field. The varying magnetic field penetrates a susceptor suitably positioned with respect to the inductive element, and generates eddy currents inside the susceptor. The susceptor has electrical resistance to the eddy currents, and hence the flow of the eddy currents against this resistance causes the susceptor to be heated by Joule heating. In cases where the susceptor comprises ferromagnetic material such as iron, nickel or cobalt, heat may also be generated by magnetic hysteresis losses in the susceptor, i.e. by the varying orientation of magnetic dipoles in the magnetic material as a result of their alignment with the varying magnetic field. In inductive heating, as compared to heating by conduction for example, heat is generated inside the susceptor, allowing for rapid heating. Further, there need not be any physical contact between the inductive heater and the susceptor, allowing for enhanced freedom in construction and application.

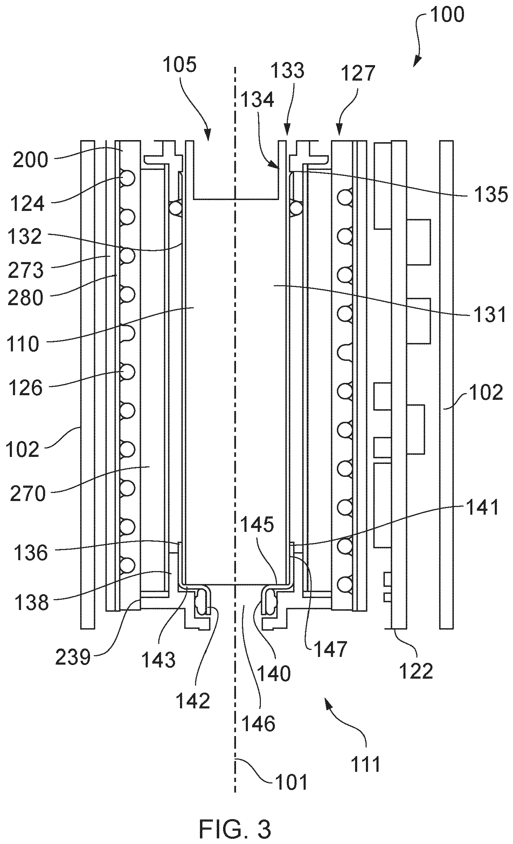

Figure 3 shows a close up side view of part of the device 100 in partial cross-section. The outer cover 102 encloses the aerosol generating assembly 111. The aerosol generating assembly 111 of the device 100 comprises the heater assembly 105 and an inductor coil assembly 127. The inductor coil assembly 127 extends around the heater assembly 105. The inductor coil assembly 127 includes a first inductor coil 124 and a second inductor coil 126. The inductor coil assembly 127 also comprises a coil support 200.

The heater assembly 105 includes a susceptor arrangement 132 (herein referred to as "a susceptor"). The susceptor 132 of this example is hollow and therefore defines a receptacle 131 within which aerosol generating material is received. For example, the article 110 can be inserted into the susceptor 132. In this example the susceptor 132 is tubular, with a circular cross section. The susceptor 132 defines a first portion of the heater assembly 105. The susceptor 132 has a generally constant diameter along its axial length. The susceptor 132 has a flared portion 134 at a first, proximal, end 133. The flared portion 134 diverges outwardly. The flared portion 134 defines an outwardly extending lip 135. That is the lip 135 has a greater diameter than the outer diameter of the main portion of the susceptor 132. The lip 135 acts to minimise contact of the susceptor 132 with other components at the first end 133. This arrangement helps with a low heat transmission, for example through conduction, when the susceptor 132 is heated. The heater assembly 105 may, in embodiments, be a one piece component. The heater assembly 105 may be formed as one part. The heater assembly 105 may comprise a susceptor and a receptacle. The susceptor may be a different feature than the receptacle.

The susceptor 132 is formed from an electrically conducting material suitable for heating by electromagnetic induction. The susceptor in the present example is formed from a carbon steel. It will be understood that other suitable materials may be used, for example a ferromagnetic material such as iron, nickel or cobalt.

In other embodiments, the feature acting as the receptacle may not be limited to being inductively heated. The feature, acting as a heating element, may therefore be heatable by electrical resistance. The heater assembly 105 may therefore comprise electrical contacts for electrical connection with the apparatus for electrically activating the heating element by passing a flow of electrical energy through the heating element. The heating element and the receptacle may be separate features.

Figure 3 shows a portion of the article 110 received within the receptacle 131 provided by the susceptor 132. The susceptor 132 and article 110 are dimensioned so that the article 110 is received by the susceptor 132. This helps ensure that the heating is most efficient. The article 110 of this example comprises aerosol generating material. The aerosol generating material is positioned within the susceptor 132. The article 110 may also comprise other components such as a filter, wrapping materials and/or a cooling structure.

The heater assembly 105 also comprises a funnel part 140. The funnel part 140 is at a second, distal, end 136 of the susceptor 132. The funnel part 140 protrudes from the susceptor 132. In embodiments, the susceptor 132 and funnel part 140 are a one-piece component.

The funnel part 140 has a thimble arrangement. The funnel part 140 is at the second, distal, end 136 of the susceptor 132. The funnel part 140 defines a second portion of the heater assembly 105. The funnel part 140 comprises a first section 141 having a first diameter and a second section 142 having a second diameter. An intermediate section 143 extends between the first and second sections 141, 142. The first section 141 is tubular and extends in the axial direction. The second section 142 is tubular and extends in the axial direction. The funnel part 140 is hollow. The intermediate section 143 forms a shoulder 145. The shoulder 145 acts as a stop to limit insertion of the article 110 into the receptacle. The shoulder 145 extends on a substantially perpendicular plane to the longitudinal axis 101.

The first section 141 has an inner diameter which is greater than the inner diameter of the second section 142. The funnel part 140 therefore converges from the first section 141 to the second section 142. The funnel part 140 therefore reduces in diameter from a susceptor end 148 to a distal end 149.

The funnel part 140 defines an air passage 146 therethrough. The first section 141 and the susceptor 132 partially overlap with each other at one end of the susceptor 132. In an example, the overlap is between about 1mm and about 3mm. In this particular example, the overlap is 2mm. In examples, there is no overlap. In such an example the susceptor 132 and funnel part 140 abut. The first section 141 overlaps the second, distal, end 136 of the susceptor 132. The first section 141 is generally cylindrical and has an inner diameter substantially corresponding to the outer diameter of the susceptor 132. The first section 141 abuts the susceptor 132. A juncture 147 is formed between the first section 141 of the funnel part 140 and the susceptor 132. The juncture 147 assists with forming a thermally conductive path between the susceptor 132 and the funnel part 140.

The juncture 147 is a fluidly sealed juncture. A fluid seal is formed between the susceptor 132 and the funnel part 140. As such a fluidly sealed fluid path is defined between the opposing ends of the susceptor 132 and the funnel part 140. The receptacle defined by the susceptor 132 therefore forms a fluid seal air path with the air passage 146 formed by the funnel part 140.

The fluid seal at the juncture 147 is formed in embodiments by a mechanical fabricated joint, for example a weld. The fluid seal at the juncture 147 is formed by a laser weld process, however it will be understood that other methods may be used such as brazing and adhering. The funnel part 140 is formed from a thermally conductive material. In embodiments, the funnel part 140 is formed from a carbon steel. The funnel part in embodiments is formed from the same material as the susceptor 132. The juncture is configured to retain a fluid seal when the susceptor 132 is at its predetermined operating temperature. By such processes the susceptor 132 and funnel part 140 are fabricated as a one-piece component.

The sealed fluid path between the susceptor 132 and the funnel part 140 therefore extends through the heater assembly 105 from one open end of the heater assembly 105 to the other open end of the heater assembly 105. As such, any fluid flow through the heater assembly 105 is contained in the heater assembly 105. A dry zone may be defined outside the heater assembly 105.

The abutment of the susceptor 132 and the funnel part 140 provides for heat transfer by conduction from the susceptor 132 to the funnel part 140. As such, it is possible to aid passive heating of the funnel part 140. By passively heating the funnel part 140 it is possible to restrict the rate of build-up of condensate in the device 100.

The funnel part 140 is axially spaced from the inductor coil assembly 127. In particular, the second section 142 of the funnel part 140 is axially spaced from the inductor coil assembly 127. As such, there is minimal or no direct heating of the funnel part 140 by the inductor coil assembly 127. The funnel part 140 may lie adjacent to the inductor coil assembly 127 in an axial direction.

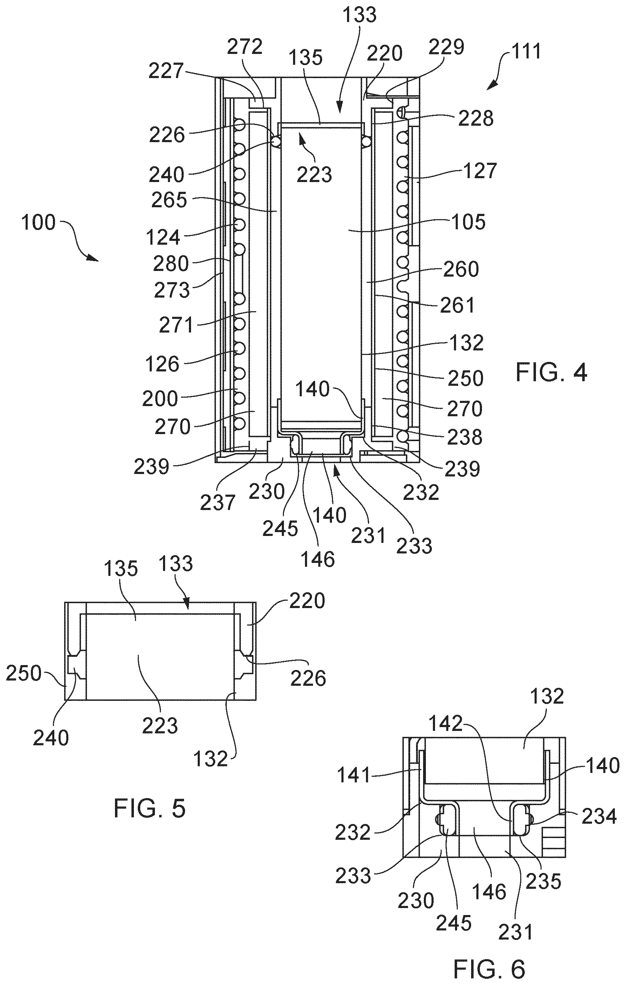

Referring in particular to Figures 4 to 8, the device 100 comprises a first end support 220 and a second end support 230. The heater assembly 105 extends between the first and second end supports 230. A barrier member 250 extends between the first end support 220 and the second end support 230. The barrier member 250 acts as a support member.

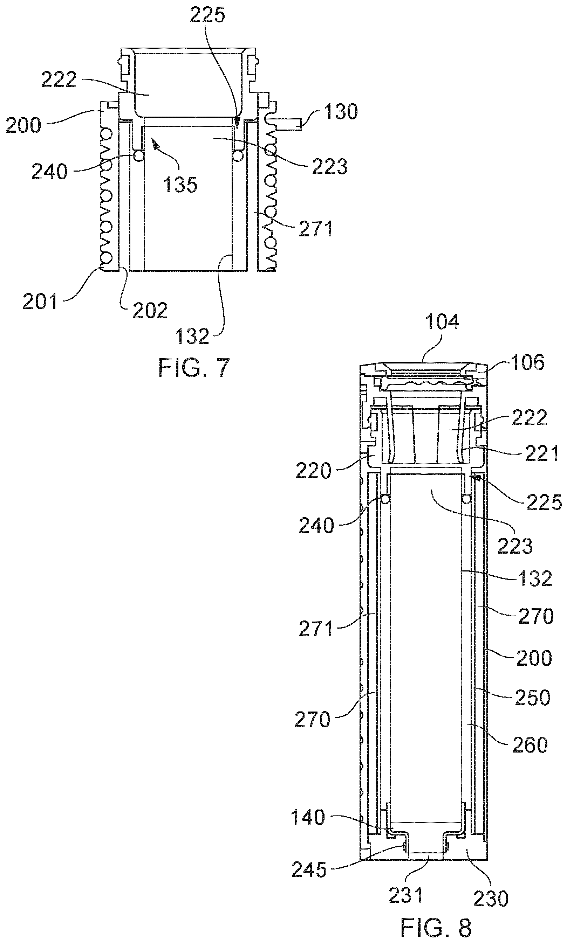

The first end support 220 engages the first, proximal, end of the heater assembly 105 to hold the susceptor 132 in place. The first end support 220 acts as an expansion chamber, as described below. Referring to Figures 7 and 8 in particular, the first end support 220 extends away from the first end of the susceptor 132 towards the opening 104 of the device. Located at least partially within the first end support 220 is a retention arrangement 221, such as a retention clip, to abut and hold the article 110 when received within the device 100. The first end support 220 is connected to the end member 106.

The first end support 220 comprises an insertion chamber 222. The insertion chamber 222 is configured to receive the article 110 therethrough. The retention arrangement 221 is in the insertion chamber 222. The insertion chamber 222 has an inner diameter greater than the diameter of the article 110. The first end support 220 forms a first, proximal, collar for the heater assembly 105. A bore 223 extends therethrough. As shown, for example, in Figures 7 and 8, a distally facing shoulder 225 is defined on the inner surface of the bore 223. The distally facing shoulder 225 locates with the lip 135 of the susceptor 132 when the susceptor is received by the first end support 220.

Referring now in particular to Figures 4 and 5, the first end support 220 forms a sealing rim 226 on a distal side of the first end support 220. The distal sealing rim 226 extends about the bore 223. A first mounting flange 227 extends from a first, proximal, end outer surface 228 of the first end support 220. The first mounting flange 227 extends circumferentially and is spaced from the sealing rim 226. The first mounting flange 227 upstands from the first end outer surface 228 and forms a first, proximal, end mounting surface 229. The first, proximal, end outer surface 228 and the first end mounting surface 229 define a stepped configuration. The first end mounting surface 229 has a greater diameter than the first end outer surface 228. In embodiments, the first end outer surface 228 and first end mounting surface define first and second step faces.

Referring in particular to Figures 4 to 8, the device 100 further comprises the second end support 230 which engages the funnel part 140 at the second, distal, end of the susceptor 132 to hold the heater assembly 105 in place. The second end support 230 forms a second, distal, collar for the heater assembly 105. In embodiments in which the funnel part is omitted, the second end support 230 engages the susceptor 132 directly. The second end support 230 acts as an air inlet, as will be described below. The second end support 230 extends away from the second end of the susceptor 132 towards the distal end of the device 100.

Referring in particular to Figures 4 and 6, the second end support 230 comprises a second end bore 231. The second end bore 231 acts as an air inlet. The air inlet defines a flow path through the second end support 230. The air inlet communicates with external to the aerosol generating assembly 111 to provide an air path to external the device 100. The second end support 230 is configured to at least partially receive the funnel part 140. The inner surface of the second end support 230 is stepped. The inner surface comprises a first stepped region 232 with a first step, and a second stepped region 233 with a second step. The first stepped region 232 receives the first section 141 of the funnel part 140. The second stepped region 233 receives the second section 142 of the funnel part 140. The second stepped region 233 includes a first sealing face 234. The second stepped region 233 includes a second sealing face 235. The first sealing face 234 is an internal circumferentially extending face. The second sealing face 235 is a circumferentially extending face extending on a plane substantially perpendicular to the longitudinal axis 101.

A second mounting flange 237 extends from a second, distal, outer surface 238 of the second end support 230. The second mounting flange 237 extends circumferentially and is spaced from a proximal end of the second end support 230. The second mounting flange 237 upstands from the second end outer surface 238 and forms a second, distal, end mounting surface 239. The second, distal, end outer surface 238 and the second, distal, end mounting surface 239 define a stepped configuration. The second end mounting surface 239 has a greater diameter than the second end outer surface 238. In embodiments, the second end outer surface 238 and second end mounting surface 239 define first and second step faces.

The barrier member 250 extends between the first end support 220 and the second end support 230. The barrier member 250 extends between the first and second end supports 220, 230. The barrier member 250 together with the first and second end supports 220, 230 encloses the heater assembly 105. This acts to assist with thermally isolating the heater assembly 105 from other components of the device 100. The barrier member 250 is a hollow, tubular member.

The barrier member 250 is fixedly mounted to the first and second end supports 220, 230. The first and second end supports, 220, 230 are received in the ends of the barrier member 250. The first end support 220 closes the proximal end of the barrier member 250. The second end support 230 closes the distal end of the barrier member 250. The barrier member 250 partially overlaps the first and second end supports, 220, 230. In an example, the overlap is between about 2mm and about 3mm. In this particular example, the overlap is about 2.2mm. In examples, there is no overlap. The proximal end of the barrier member 250 abuts the first end outer surface 228. The distal end of the barrier member 250 abuts the second end outer surface 238.

The barrier member 250 is fixedly mounted to the first and second end supports 220, 230. The barrier member 250 forms a fluid seal with the first and second end supports 220, 230. In embodiments a mechanical fabricated joint, for example a weld, is formed between the barrier member 250 and each of the first and second end supports 220, 230. The fluid seal at the junction of the parts is formed by a weld process, however it will be understood that other methods may be used such as brazing and adhering. In embodiments, the barrier member 250, and first and second end supports 220, 230 are formed from the same material. The junction is configured to retain a fluid seal when the susceptor 132 is at its predetermined operating temperature. By such a process the barrier member 250 and the first and second end supports 220, 230 are formed as a one-piece component.

In embodiments, the barrier member 250 is formed from a non-metallic material to assist with limiting interference with magnetic induction. In this particular example, the barrier member 250 is constructed from polyether ether ketone (PEEK). The first and second end supports 220, 230 are constructed from PEEK. Other suitable materials are possible. Parts formed from such materials help ensure that the barrier member 250 remains rigid/solid when the susceptor is heated. The barrier member 250 is formed from a rigid material to aid support of other components, such as the heater assembly 105 and the end supports 220, 230. The barrier member 250 may be constructed from an insulating material, such as plastic for example. In an example, the barrier member 250 has a thickness between about 0.1mm and about 0.5mm. In the present example, the thickness is about 0.3mm.

The heater assembly 105, the barrier member 250, and the first and second end supports 220, 230 are coaxial around the central longitudinal axis of the susceptor 132. The barrier member 250 may help insulate the various components of the device 100 from the heat generated in the susceptor 132.

A radial gap is provided between the susceptor 132 and the first end support 220. The diameter of the bore 223 is greater than the diameter of the external face of the susceptor 132. The radial gap is approximately 0.2mm, although the gap may differ. The provision of the radial gap aids with minimising heat transfer between the susceptor 132 and the first end support 220.

Referring now in particular to Figures 4 to 6, a first sealing member 240 forms a fluid seal between the heating assembly 105 and the first end support 220. The first sealing member 240 is a circumferentially extending member. The first sealing member 240 comprises a silicon rubber seal. Other suitable materials may be used. The first sealing member 240 is resilient. The material is configured to be stable when the heating assembly 105 is at operating temperature. The first sealing member 240 is fixedly mounted on the susceptor 240. The first sealing member 240 is adhered to the susceptor 132, for example by overmoulding of the first sealing member 240 on the outer surface of the susceptor 132. The first sealing member 240 is spaced from the proximal end of the susceptor 132. When the proximal end of the susceptor 132 is received by the first end support 220, the sealing rim 226 of the first end support 220 abuts with and seals against the first sealing member 240. As such a seal is formed between the first end support 220 and the susceptor 220. The first sealing member 240 forms a seal in the axial direction.

The first sealing member 240 abuts with and seals against the barrier member 250. The first sealing member 240 upstands from the susceptor 132. The first sealing member 240 abuts the internal surface of the barrier member 250. Accordingly, a seal is formed between the susceptor 132 and the barrier member 250. The first sealing member 240 forms a seal in the radial direction. The first sealing member 240 acts to locate and orientate the susceptor with respect to the first end support 220 and the barrier member 250.

A second sealing member 245 forms a fluid seal between the heating assembly 105 and the second end support 230. The second sealing member 245 is a circumferentially extending member. The second sealing member 245 comprises a silicon rubber seal. Other suitable materials may be used. The second sealing member 245 is resilient. The material is configured to be stable when the heating assembly 105 is at operating temperature. The second sealing member 245 is fixedly mounted on the funnel part 140. In embodiments, the second sealing member is on the susceptor 132, for example where the funnel part is omitted. The second sealing member 245 is adhered to the susceptor 132, for example by overmoulding of the second sealing member 245 on the outer surface of the funnel part 140. The second sealing member 245 is adjacent to the open end of the funnel part 140. When the distal end of the heating assembly is received by the second end support 230, the first sealing face 234 of the second end support 230 abuts with and seals against the second sealing member 245. As such a seal is formed between the second end support 230 and the heating assembly 105. The second sealing member 245 forms a seal in the radial direction.

The second sealing member 245 abuts with and seals against the second sealing face 235 of the second end support 230. The second sealing member 245 forms a seal in the axial direction. The second sealing member 245 upstands from the heater assembly 105. The second sealing member 245 acts to locate and orientate the heater assembly 105 with respect to the second end support 230 and the barrier member 250.

In embodiments, the first sealing member 240 is on the first end support 220 and seals with the heater assembly 105. In embodiments, the second sealing member 245 is on the second end support 230 and seals with the heater assembly 105. The second sealing member 245 is on the second section 142 of the funnel part 140. In embodiments, the second sealing member 245 is on the first section 141 of the funnel part 140. In such an embodiment, the second sealing member 245 seals against a proximal rim of the second end support 230.

The first sealing member 240 and second sealing member 250 form a sealed air flow path through the second sealing member 250, heater assembly 105 and first sealing member 240. The barrier member 250 and the first and second end supports 220, 230 form a contiguously sealed enclosure for the heater assembly 105. The barrier member 250 is spaced from the susceptor 132. An inner surface of the barrier member 250 is positioned away from the outer surface of the susceptor 132 to provide an air gap between the barrier member 250 and the heater assembly 105. The air gap provides insulation from the heat generated in the susceptor 132.

A fluidly sealed cavity 260 is formed between the heater assembly 105 and the barrier member 105. The fluidly sealed cavity 260 forms a chamber. The cavity 260 provides an air gap. A fluidly sealed enclosure 261 is formed around part of the heater assembly 105. The fluidly sealed enclosure is formed by the barrier member 105, first and second sealing members 240, 245, heater assembly 105 and the second end support 230. In some embodiments, the first end support 220 forms part of the enclosure 261. In some embodiments, the fluidly sealed enclosure 261 is formed by the barrier member 105, heater assembly 105 and first and second sealing members 240, 245. In embodiments, the gap between the heater assembly 105 and the barrier member 105 is between about 0.8mm and 1mm. In embodiments, the gap is about 0.9mm.

A sensor, such as a thermocouple 265, is disposed in the fluidly sealed cavity 260. The thermocouple 265 is mounted on the susceptor 132. The thermocouple 265 is configured to determine the temperature of the susceptor 132. The thermocouple 265 directly detects the temperature of the susceptor 132. The device 100 may comprise two or more thermocouples 132 configured to determine the temperature of the susceptor 132. The provision of the fluidly sealed cavity 260 helps to isolate the thermocouples 265 from atmosphere external to the fluidly sealed cavity 260. The provision of the fluidly sealed cavity 260 helps to isolate the thermocouples 265 from the air flow path through the device 100. As such, condensate from the air flow path is restricted from flowing to the thermocouples 265.

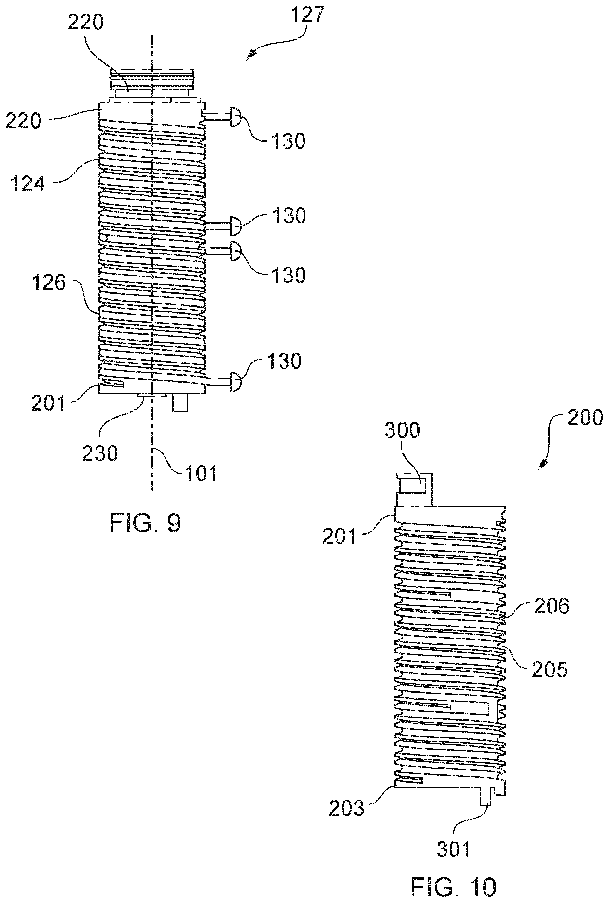

Referring to Figures 9 and 10 in particular, the inductor coil assembly 127 includes the first inductor coil 124 and the second inductor coil 126. The first and second inductor coils 124, 126 are made from an electrically conducting material. In this example, the first and second inductor coils 124, 126 are made from Litz wire/cable which is wound in a helical fashion to provide helical inductor coils 124, 126. Litz wire comprises a plurality of individual wires which are individually insulated and are twisted together to form a single wire. Litz wires are designed to reduce the skin effect losses in a conductor. In the example device 100, the first and second inductor coils 124, 126 are made from copper Litz wire which has a circular cross section. In other examples the Litz wire can have other shape cross sections, such as rectangular. The number of inductor coils may differ. For example, in embodiments the inductor coil assembly 127 may include a single inductor coil. The first or second inductor coil may be omitted.

The first inductor coil 124 is configured to generate a first varying magnetic field for heating a first section of the susceptor 132 (refer to Figure 4) and the second inductor coil 126 is configured to generate a second varying magnetic field for heating a second section of the susceptor 132. In this example, the first inductor coil 124 is adjacent to the second inductor coil 126 in a direction along the longitudinal axis 101 of the device 100 (that is, the first and second inductor coils 124, 126 do not overlap). The susceptor arrangement 132 may comprise a single susceptor, or two or more separate susceptors. Ends 130 of the first and second inductor coils 124, 126 can be connected to the PCB 123 (refer to Figure 2).

It will be appreciated that the first and second inductor coils 124, 126, in some examples, may have at least one characteristic different from each other. For example, the first inductor coil 124 may have at least one characteristic different from the second inductor coil 126. More specifically, in one example, the first inductor coil 124 may have a different value of inductance than the second inductor coil 126. In Figures 3 and 4, the first and second inductor coils 124, 126 are of different lengths such that the first inductor coil 124 is wound over a smaller section of the susceptor 132 than the second inductor coil 126. Thus, the first inductor coil 124 may comprise a different number of turns than the second inductor coil 126 (assuming that the spacing between individual turns is substantially the same). In yet another example, the first inductor coil 124 may be made from a different material to the second inductor coil 126. In some examples, the first and second inductor coils 124, 126 may be substantially identical.

In this example, the first inductor coil 124 and the second inductor coil 126 are wound in the same direction. The inductor coils may be active at different times. For example, initially, the first inductor coil 124 may be operating to heat a first section of the article 110, and at a later time, the second inductor coil 126 may be operating to heat a second section of the article 110. In embodiments, the first inductor coil 124 and the second inductor coil 126 are wound in opposite directions. Winding the coils in opposite directions helps reduce the current induced in the inactive coil when used in conjunction with a particular type of control circuit. In such an embodiment, the first inductor coil 124 may be a right-hand helix and the second inductor coil 126 may be a left-hand helix. In another embodiment, the first inductor coil 124 may be a left-hand helix and the second inductor coil 126 may be a right-hand helix.

It will be understood that the number of inductor coils may differ. In embodiments, the device 100 comprises a single inductor coil.

The device 100 comprises a coil support 200 acting as a support member. The support member may be generally tubular and at least partially surround the susceptor 132. The support member 200 supports the first and second inductor coils 124, 126. The coil support 200 is shown in cross-section in Figure 4. A side view of the coil support 200 is shown with various parts of the device 100 omitted in Figure 9. The coil support 200 is shown in Figure 10.

The coil support 200 extends between the first and second end supports 220, 230. The coil support 200 together with the first and second end supports 220, 230 encloses the heater assembly 105. This acts to assist with thermally isolating the heater assembly 105 from other components of the device 100. The coil support 200 is a hollow, tubular member.

In embodiments, the coil support 200 is formed from a non-metallic material to assist with limiting interference with magnetic induction. In this particular example, the coil support 200 is constructed from polyether ether ketone (PEEK). Other suitable materials are possible. Coil supports formed from such materials ensure that the assembly remains rigid/solid when the susceptor is heated. The coil support 200 is formed from a rigid material to aid support of other components, such as the coils 124, 126. The coil support 200 may be constructed from an insulating material, such as plastic for example. In an example, the coil support 200 has a thickness between 1mm and 1.5mm. In the present example, the thickness is about 1.3mm. The coil support 200 is a one piece construction. In embodiments, the coil support is an assembly of two or more parts.

The coil support 200 acts as a chassis to aid assembly of the device 100. The coil support 200 forms a second chassis which is mountable on the chassis 109 acting as a first chassis. The coil support 200 acts as a mounting arrangement for other features of the aerosol generating assembly 111.

As shown in Figures 3, 4 and 9 in particular, the first and second inductor coils 124, 126 are positioned around the coil support 200 and abut the coil support 200. The first and second inductor coils 124, 126 are on a radially outward side 201 of the coil support 200. In embodiments, the first and second inductor coils are on a radially inward side 202 of the coil support 200.

The susceptor 132, the coil support 200, and the first and second inductor coils 124, 126 are coaxial around the central longitudinal axis 101 of the susceptor 132. The coil support 200 may help insulate the various components of the device 100 from the heat generated in the susceptor 132.

The coil support 200 has an outer surface 203. The outer surface 203 is spaced away from the outer cover 102. The coil support 200 is spaced from the heater assembly 105. The coil support 200 has an inner surface which is positioned away from the outer surface 203 of the susceptor 132.

The coil support 200 is fixedly mounted to the first and second end supports 220, 230. The first and second end supports, 220, 230 are received in the ends of the coil support 200. The first end support 220 closes the proximal end of the coil support 200. The second end support 230 closes the distal end of the coil support 200. The coil support 200 partially overlaps the first and second end supports, 220, 230. The proximal end of the barrier member 250 abuts the first end outer surface 228. The distal end of the barrier member 250 abuts the second end outer surface 238. The proximal end of the coil support 200 overlaps the first, proximal, end mounting surface 229 of the first end support 220. The distal end of the coil support 220 overlaps the second, distal, end mounting surface 229 of the second end support 230.

The coil support 200 is fixedly mounted to the first and second end supports 220, 230. The coil support 200 is retained between the first and second end supports 220, 230. In embodiments a mechanical fabricated joint, such as welding or adhering fixes the coil support 200 in place. In embodiments, the coil support 200, and first and second end supports 220, 230 are formed from the same material.

Referring in particular to Figures 3, 4, 9 and 10, the first and second inductor coils 124, 126 are aligned on the coil support 200 by the coil support 200. That is, the first and second inductor coils 124, 126 are retained in a specific arrangement with respect to the coil support 200 by a feature of the coil support 200. The alignment feature in examples is a channel 205. The channel 205 is formed in the radially outward side 201 of the coil support 200. The channel 205 is a helical channel 205. The channel 205 receives the first and second inductor coils 124, 126. The first and second inductor coils 124, 126 are retained by the channel 205. The channel 205 follows a constant helical path. The channel 205 comprises a plurality of turns around the coil support 200. The channel 205, acting as an alignment feature provides for a consistent path of the coils 214, 216, for example consistent spacing. This helps the performance of the inductor coil assembly to be maximised, and/or for a predetermined attribute of the coil to be achieved.

Each of the first and second inductor coils 124, 126 are aligned on the coil support 200 in a helical arrangement. One of the inductor coils in examples may be omitted. Each of the first and second inductor coils 124, 126 follows a helical path. Turns of the helical path of each of the first and second inductor coils 124, 126 have equal spacing.

In embodiments, the helical channel 205 is formed by a groove in the outer surface 203 of the support coil 200. In embodiments, the helical channel 205 is formed by a pair of adjacent ridges extending in a helical arrangement. The ridges be noncontinuous and may be formed from a plurality of protrusions. The protrusions may define a helical path in which the support coil is received and retained.

The coil support 200 comprises a helical recess 206 between adjacent turns of the channel 205. The helical recess 206 is an elongate groove. In examples, the helical recess 206 comprises a plurality of recess sections. The helical recess 206 in examples acts as an air gap. The provision of the helical recess aids with restricting heat transfer. The provision of the helical recess may aid weight minimization. The helical recess 206 forms a double helix configuration with the channel 205. In embodiments, the helical recess is omitted. The helical recess is not shown in Figures 3 and 4.

The first and second inductor coils 124, 126 are retained in the channel 205. Retention features such as clips, bonding, and an over layer may be used to retain the first and second inductor coils 124, 126 in the channel 205.

Each of the first and second inductor coils 124, 126 are fully received in the coil support 200. That is each of the first and second inductor coils 124, 126 lies planar with or recessed from the surface of the coil support 200. In embodiments, the first and second inductor coils 124, 126 partially protrude from the channel 205.

The coil support 200 comprises a single channel. However, it will be understood that the channel 205 may be separated into two channel portions, one for each coil 124, 126. Each channel may have one or more different properties, for example pitch, width, depth and length to provide a different alignment between the coils 124, 126.

A ferrite shield 280 extends around the inductor coils 124, 126. The ferrite shield acts as an electromagnetic shield. Other suitable materials may be used. The ferrite shield 280 is mounted on the coil support 200. The ferrite shield 280 abuts the coils support 200 and so may be directly mounted to the coil support 200, for example by adhering. The channel 205 provides for the coils 124, 126 to be recessed in the coil support 200. The inductor coils 124, 126 are enclosed by the coil support 200 and the ferrite shield 280.

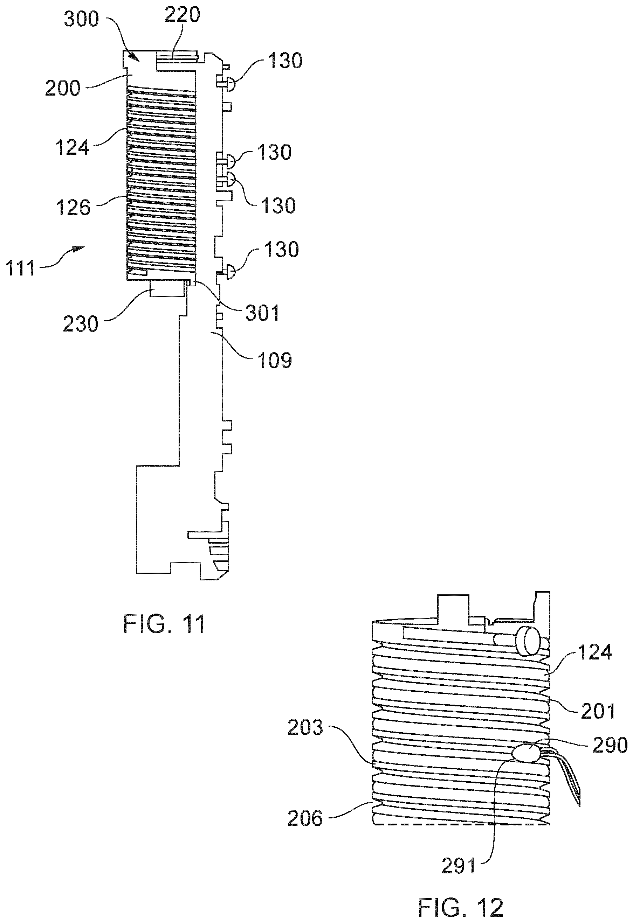

Referring to Figure 12, a sensor 290, such as a thermocouple, is positioned on the coil support 200. The coil support 200 comprises a sensor mount 291. This assists with accurately positioning the sensor with respect to the coil, and so aids accurate measurement. The mount 291 comprises a recess. The mount 291 forms a locating surface for mounting the thermocouple.

The alignment feature in the above described embodiments is the channel. However, it will be understood that the channel may be omitted and the alignment feature may vary.

In the above described embodiments, the coil support 200 is provided with the channel 205 for aligning the coils and/or other alignment features. It will be understood that in some embodiments the channel for aligning the coils and/or other alignment features may be omitted. In such an embodiment the coils may be adhered to a surface of the coil support, or may be assembled around the coil support with a gap therebetween.

The heater assembly 105, the barrier member 250, and the coil support 200 are coaxial around the central longitudinal axis of the susceptor 132. The coil support 200 may help insulate the various components of the device 100 from the heat generated in the susceptor 132.

The coil support 200 is spaced from the susceptor 132. The coil support 200 is spaced from the barrier member 250. The barrier member 250 is between the heater assembly 105 and the coil support 200. An insulation chamber 270 is formed between the coil support 200 and the barrier member 250.

In an example, the spacing between the coil support 200 and the barrier member 250 is between 0.5mm and 1.5mm. In the present example, the thickness is about 0.9mm. The coil support 200 acts as a second barrier member. By providing barrier members, acting as barriers, in a spaced apart arrangement it is possible to help provide separate chambers to assist with isolating different components of the device from each other.

The barriers act as insulation members. As such, the barriers form part of an insulation stack to limit thermal transfer from the susceptor 132 to external of the aerosol generating assembly 111. The barrier member 250 acts as a first insulating member. The coil support 200 acts as a second insulating member. An insulating layer 271 extends between the barrier member 250 and the coil support 200. The insulating layer 271 extends around the barrier member 250. The insulating layer 271 abuts the barrier member 250 and the coil support 200.

By providing barrier members in a spaced relationship, it is possible to restrict any compression of the insulating layer 271. As such, the insulating properties of the insulating layer may be maximised.

In embodiments, the insulating layer 271 is supported by the barrier member 250 and the coil support 200. In some embodiments the insulating layer 271 is supported by the barrier member 250. In such embodiments, the insulating layer 271 may be spaced, for example by a small gap, from the coil support 200. In some embodiments the insulating layer 271 is supported by the coil support 200. In such embodiments, the insulating layer 271 may be spaced, for example by a small gap, from the barrier member 250. The insulating layer 271 may be attached to one or both of the barrier member 250 and coil support 200. In embodiments, the barrier member 250 may be omitted. In embodiments, the coil support 200 may be integrally formed with the insulating layer 271. The insulating layer 271 may be omitted. In such embodiments, an air gap is formed between the barrier member 250 and the coil support 200. In such an arrangement, the air gap acts as an insulator.

The insulating layer 271 acts as a third insulating member. The insulating layer is tubular. The insulating layer 271 may be a panel. The insulating layer 271 in embodiments is a sheet prior to assembly. The insulating layer 271 in embodiments is formed around the inner side of the coil support 200 in a tubular arrangement. End lips 272 (refer to Figure 4) help to retain the insulating layer 271. The insulating layer 271 is adhered to the coil support 20. In examples, the insulating layer 271 is adhered / bonded to the barrier member 250. The barrier member 250 spaces the insulating layer 271 from the susceptor 132. The coil support 200 spaces the insulating layer 271 away from the inductor coils 124, 126.

The insulation stack may be provided by a combination of two or more of the following materials (i) air (which has a thermal conductivity of about 0.02W/mK), (ii) Aerogel, for example AeroZero^{®} (which has a thermal conductivity of between about 0.03W/mK and about 0.04W/mK), (iii) polyether ether ketone (PEEK) (which may have a thermal conductivity of about 0.25W/mK in some examples), (iv) ceramic cloth (which has a specific heat of about 1.13kJ/kgK), (v) thermal putty. Other suitable materials may be used.

The insulating layer 271 is formed from aerogel. Other suitable materials may be used, for example may comprise, for example, a closed-cell material, a closed-cell plastics material, silicone foam, a rubber material, wadding, fleece, non-woven material, non-woven fleece, woven material, knitted material, nylon, foam, polystyrene, polyester, polyester filament, polypropylene, a blend of polyester and polypropylene, cellulose acetate, paper or card, and corrugated material such as corrugated paper or card.

By providing barrier members either side of the aerogel, for example, it is possible to provide a protective barrier for the insulating layer 271. The one or more barriers helps to support the insulating layer 271 along its length.

A combination of a barrier member with an aerogel insulating layer assists with providing an enhanced insulating configuration around the heater assembly 105 to restrict heat transfer to the shell of the device 100 in a compact arrangement. In embodiments, the barrier member is formed from a material having a thermal conductivity which is less than a thermal conductivity of the material of the support member.

The insulating layer 271 acts as an inner insulating layer 273. An outer insulating layer 273 extends around the inductor coil assembly 127. The outer insulating layer 273 forms a tubular arrangement. The outer insulating layer 273 is supported by the inductor coil assembly 127. The inner and outer insulating layers 271, 273 sandwich the inductor coil assembly 127. The outer insulating layer 273 is mounted on the ferrite layer 280. The outer insulating layer 273 is adhered to the ferrite layer 280, although other mounting arrangements are anticipated. By providing an outer insulating layer 273 allows for a predetermined thickness of insulation to be used whilst allowing for the distance between the coils and the susceptor 132 to be varied. The outer insulating layer 273 is formed from aerogel. Other suitable materials may be used, for example a porous foam material.

Referring to Figure 11, the first end support 220 protrudes from the proximal end of the coil support 200. The second end support 230 protrudes from the distal end of the coil support 200. The first end support 220 is axially aligned. The second end support 230 is axially aligned. The aerosol generating assembly 111 is mounted to the chassis 109. The aerosol generating assembly 111 is mounted at its proximal and distal ends. The aerosol generating assembly mount 113 of the chassis 109 holds the aerosol generating assembly 111. A first locating feature 300 locates the aerosol generating assembly 111 on the chassis 109 at the first, proximal, end. A second locating feature 301 locates the aerosol generating assembly 111 on the chassis 109 at the second, distal, end.

The inductor coil ends 130 extend from the aerosol generating assembly 111. The inductor coil ends 130 are supported on the chassis 109. The inductor coil ends 130 are connected with the PCB 123.

In the above examples, the susceptor 132 has a thickness 154 of about 0.08mm. The thickness of the susceptor 132 is the average distance between the inner surface of the susceptor 132 and the outer surface of the susceptor 132, measured in a direction perpendicular to the axis 158.

In an example, the susceptor 132 has a length of between about 30mm and about 50mm, or between about 30mm and about 35mm. In this particular example, the susceptor 132 has a length of about 34.8mm and can receive an article 110 comprising aerosol generating material. The length of the aerosol generating material and susceptor 132 is measured in a direction parallel to the axis 101.

The outer cover 102 provides protection to the internal components of the device, and is generally in contact with a user's hand when the device is in use. The outer cover 102 comprises an inner surface and an outer surface.

In some examples the inductor coil itself may heat up as it is used to induce a magnetic field, for example from resistive heating due to the current passing through it to induce the magnetic field. Providing an insulating layer between the inductor coil and outer cover helps ensure that the heated inductor coil is insulated from the outer cover. The ferrite shielding helps insulate the outer cover. It has been found that when the ferrite shielding is in contact with, and at least partially surrounds the one or more inductor coils, the surface temperature of the outer cover can be reduced by about 3°C.

The inner surface of the outer cover may be positioned away from the outer surface of the insulating member by a distance of between about 2mm and about 3mm. It has been found that a separation distance of this size provides enough insulation to ensure that the outer cover does not get too hot. Air may be located between the outer surface of the insulating member and the outer cover.

The inner surface of the outer cover may be positioned away from an outer surface of the inductor coil by a distance of between about 0.2mm and about 1mm.

The inner surface of the inductor coil may be positioned away from the outer surface of the susceptor by a distance of between about 3mm and about 4mm. In this particular example, the distance is about 3.2mm.

The outer cover may comprise aluminium.

The outer cover may have a thermal conductivity of between about 140 W/mK and about 220 W/mK. For example, aluminium has a thermal conductivity of around 209 W/mK.

The outer cover may have a thickness of between about 0.4mm and about 2mm. The outer cover may act as an insulating barrier.

Although each of the susceptor 132, barrier member 250, and coil support 200 have a circular shaped cross section, their cross sections may have any other shape, and in some examples may be different to each other.

The above embodiments are to be understood as illustrative examples of the invention. Further embodiments of the invention are envisaged. It is to be understood that any feature described in relation to any one embodiment may be used alone, or in combination with other features described, and may also be used in combination with one or more features of any other of the embodiments, or any combination of any other of the embodiments. Furthermore, equivalents and modifications not described above may also be employed without departing from the scope of the invention, which is defined in the accompanying claims.

## Claims

1. An aerosol provision device (100), comprising:
a heater assembly (105) configured to receive aerosol generating material, wherein the heater assembly (105) comprises a susceptor (132) which is heatable by penetration with a varying magnetic field;
a first insulating member (250) extending around the susceptor (132);
a second insulating member (200) extending around and positioned away from the first insulating member (250), and
**characterized by** a third insulating member (271) extending between the first and second insulating members (250, 200), and
an inductor coil (124, 126) extending around the second insulating member (200) such that the first, second and third insulating members (271) are positioned between the inductor coil (124, 126) and the susceptor (123), wherein the inductor coil (124, 126) is configured to generate the varying magnetic field.

2. The aerosol provision device (100) of claim 1, wherein the third insulating member (271) comprises a material with a thermal conductivity less than the thermal conductivity of the material of the second insulating member (200).

3. The aerosol provision device (100) of claim 1 or claim 2, wherein the second insulating member (200) is formed from a solid material, and the third insulating member (271) is formed from at least one of a cellular and fibrous material.

4. The aerosol provision device (100) of any of claims 1 to 3, wherein the second insulating member (200) and third insulating member (271) are positioned away from the susceptor (123) to form an air gap.

5. The aerosol provision device (100) of any of claims 1 to 4, wherein the third insulating member (271) is supported on the second insulating member (200).

6. The aerosol provision device (100) of any of claims 1 to 5, wherein the first insulating member (250) is a barrier member.

7. The aerosol provision device (100) of any of claims 1 to 6, wherein the second insulating member (200) is a support member; and/or
wherein the second insulating member (200) comprises a thermoplastic,
wherein, optionally the thermoplastic is polyether ether ketone.

8. The aerosol provision device (100) of claim 7, wherein the third insulating member (271) abuts the first and second insulating members (250, 200); and/or
wherein the third insulating member (271) comprises an aerogel.

9. The aerosol provision device (100) of any of claims 1 to 8, wherein the inductor coil (123) is supported by the second insulating member (200).

10. The aerosol provision device (100) of any of claims 1 to 9, wherein each insulating member (250, 200, 271) is tubular, and/or
the device (100) comprising an electromagnetic shield (280) extending around the inductor coil (123).

## Patentansprüche

1. Aerosolbereitstellungsvorrichtung (100), umfassend:
eine Heizeranordnung (105), die ausgelegt ist, aerosolerzeugendes Material aufzunehmen,
wobei die Heizeranordnung (105) einen Suszeptor (132) umfasst, der durch Eindringen eines sich ändernden Magnetfelds erhitzbar ist;
ein erstes Isolierelement (250), das sich um den Suszeptor (132) erstreckt;
ein zweites Isolierelement (200), das sich um das erste Isolierelement (250) erstreckt und davon beabstandet positioniert ist, und
**gekennzeichnet durch** ein drittes Isolierelement (271), das sich zwischen dem ersten und dem zweiten Isolierelement (250, 200) erstreckt, und
eine Induktorspule (124, 126), die sich um das zweite Isolierelement (200) erstreckt, sodass das erste, das zweite und das dritte Isolierelement (271) zwischen der Induktorspule (124, 126) und dem Suszeptor (123) positioniert sind, wobei die Induktorspule (124, 126) ausgelegt ist, das sich ändernde Magnetfeld zu erzeugen.

2. Aerosolbereitstellungsvorrichtung (100) nach Anspruch 1, wobei das dritte Isolierelement (271) ein Material mit einer Wärmeleitfähigkeit umfasst, die geringer ist als die Wärmeleitfähigkeit des Materials des zweiten Isolierelements (200).

3. Aerosolbereitstellungsvorrichtung (100) nach Anspruch 1 oder Anspruch 2, wobei das zweite Isolierelement (200) aus einem festen Material gebildet ist, und das dritte Isolierelement (271) aus mindestens einem der folgenden Materialien gebildet ist: einem zellulären und einem faserigen Material.

4. Aerosolbereitstellungsvorrichtung (100) nach einem der Ansprüche 1 bis 3, wobei das zweite Isolierelement (200) und das dritte Isolierelement (271) von dem Suszeptor (123) beabstandet positioniert sind, um einen Luftspalt zu bilden.

5. Aerosolbereitstellungsvorrichtung (100) nach einem der Ansprüche 1 bis 4, wobei das dritte Isolierelement (271) auf dem zweiten Isolierelement (200) abgestützt ist.

6. Aerosolbereitstellungsvorrichtung (100) nach einem der Ansprüche 1 bis 5, wobei das erste Isolierelement (250) ein Barriereteil ist.

7. Aerosolbereitstellungsvorrichtung (100) nach einem der Ansprüche 1 bis 6, wobei das zweite Isolierelement (200) ein Stützelement ist; und/oder
wobei das zweite Isolierelement (200) einen Thermoplast umfasst,
wobei der Thermoplast wahlweise Polyetheretherketon ist.

8. Aerosolbereitstellungsvorrichtung (100) nach Anspruch 7, wobei das dritte Isolierelement (271) an das erste und das zweite Isolierelement (250, 200) angrenzt; und/oder
wobei das dritte Isolierelement (271) ein Aerogel umfasst.

9. Aerosolbereitstellungsvorrichtung (100) nach einem der Ansprüche 1 bis 8, wobei die Induktorspule (123) durch das zweite Isolierelement (200) abgestützt wird.

10. Aerosolbereitstellungsvorrichtung (100) nach einem der Ansprüche 1 bis 9, wobei jedes Isolierelement (250, 200, 271) rohrförmig ist, und/oder
die Vorrichtung (100) eine elektromagnetische Abschirmung (280) umfasst, die sich um
die Induktorspule (123) erstreckt.

## Revendications

1. Dispositif de fourniture d'aérosol (100) comprenant :
un ensemble de chauffage (105) configuré pour recevoir un matériau générateur d'aérosol, dans lequel l'ensemble de chauffage (105) comprend un suscepteur (132) qui peut être chauffé par pénétration par un champ magnétique variable ;
un premier élément isolant (250) s'étendant autour du suscepteur (132) ;
un deuxième élément isolant (200) s'étendant autour du premier élément isolant (250) et positionné à distance de celui-ci, et
**caractérisé par** un troisième élément isolant (271) s'étendant entre le premier élément isolant et le deuxième élément isolant (250, 200), et
une bobine d'induction (124, 126) s'étendant autour du deuxième élément isolant (200) de telle sorte que les premier, deuxième et troisième éléments isolants (271) sont positionnés entre la bobine d'induction (124, 126) et le suscepteur (123), ladite bobine d'induction (124, 126) étant configurée pour générer le champ magnétique variable.

2. Dispositif de fourniture d'aérosol (100) selon la revendication 1, dans lequel le troisième élément isolant (271) comprend un matériau ayant une conductivité thermique inférieure à la conductivité thermique du matériau du deuxième élément isolant (200).

3. Dispositif de fourniture d'aérosol (100) selon la revendication 1 ou la revendication 2, dans lequel le deuxième élément isolant (200) est formé à partir d'un matériau solide, et le troisième élément isolant (271) est formé à partir d'au moins un parmi un matériau cellulaire et un matériau fibreux.

4. Dispositif de fourniture d'aérosol (100) selon l'une quelconque des revendications 1 à 3, dans lequel le deuxième élément isolant (200) et le troisième élément isolant (271) sont positionnés à distance du suscepteur (123) de manière à former un espace d'air.

5. Dispositif de fourniture d'aérosol (100) selon l'une quelconque des revendications 1 à 4, dans lequel le troisième élément isolant (271) est supporté sur le deuxième élément isolant (200).

6. Dispositif de fourniture d'aérosol (100) selon l'une quelconque des revendications 1 à 5, dans lequel le premier élément isolant (250) est un élément barrière.

7. Dispositif de fourniture d'aérosol (100) selon l'une quelconque des revendications 1 à 6, dans lequel le deuxième élément isolant (200) est un élément de support ; et/ou
dans lequel le deuxième élément isolant (200) comprend un thermoplastique,
dans lequel, facultativement, le thermoplastique est du polyétheréthercétone.

8. Dispositif de fourniture d'aérosol (100) selon la revendication 7, dans lequel le troisième élément isolant (271) vient en butée contre le premier élément isolant et le deuxième élément isolant (250, 200) ; et/ou
dans lequel le troisième élément isolant (271) comprend un aérogel.

9. Dispositif de fourniture d'aérosol (100) selon l'une quelconque des revendications 1 à 8, dans lequel la bobine d'induction (123) est supportée par le deuxième élément isolant (200).

10. Dispositif de fourniture d'aérosol (100) selon l'une quelconque des revendications 1 à 9, dans lequel chaque élément isolant (250, 200, 271) est tubulaire, et/ou
le dispositif (100) comprend un blindage électromagnétique (280) s'étendant autour de la bobine d'induction (123).
